## Europäisches Patentamt
## European Patent Office
## Office européen des brevets

(19)

(11) Numéro de publication: **0 048 191**
**B1**

(12) **FASCICULE DE BREVET EUROPEEN**

(45) Date de publication du fascicule du brevet:
15.02.84

(51) Int. Cl.³: **B 64 C 1/12**

(21) Numéro de dépôt: **81401343.9**

(22) Date de dépôt: **26.08.81**

(54) Structure de fuselage pour aéronef résistant aux ruptures longitudinales du revêtement extérieur.

(30) Priorité: **09.09.80 FR 8019439**

(43) Date de publication de la demande:
**24.03.82 Bulletin 82/12**

(45) Mention de la délivrance du brevet:
**15.02.84 Bulletin 84/7**

(84) Etats contractants désignés:
**DE GB IT NL SE**

(56) Documents cités:
**GB - A - 1 497 155**

(73) Titulaire: **SOCIETE NATIONALE INDUSTRIELLE AEROSPATIALE, 37 boulevard de Montmorency, F-75016 Paris Cedex 16 (FR)**

(72) Inventeur: **Prat, Maurice, 1, rue d'Aquitaine, F-31170 Tournefeuille (FR)**
Inventeur: **Ostermann, Lucien, Chemin du Moulin, F-31490 Brax par Leguevin (FR)**
Inventeur: **Cassan, Bernard, 15 rue Michel de Montaigne, F-31200 Toulouse (FR)**

(74) Mandataire: **Bonnetat, Christian et al, Cabinet PROPI Conseils 23 rue de Léningrad, F-75008 Paris (FR)**

Structure de fuselage pour aéronef résistant aux ruptures longitudinales du revêtement extérieur.

La présente invention concerne une structure de fuselage pour aéronef, résistant aux ruptures longitudinales du revêtement extérieur.

On sait que la structure habituelle d'un fuselage pressurisé par aéronef comporte une suite de cadres transversaux espacés et solidarisés entre eux au moyen de lisses longitudinales réparties à la périphérie desdits cadres, l'ensemble des cadres et des lisses étant recouvert d'un revêtement extérieur constitué d'éléments en plaque, tels que des tôles, fixés sur ledit ensemble et assemblés entre eux le long de lignes de jonction respectivement transversales et longitudinales.

Les jonctions longitudinales (parallèles aux lisses) des tôles du revêtement extérieur sont particulièrement sollicitées. En effet, la structure du fuselage d'un avion gros porteur, par suite de l'optimisation de sa masse par rapport à sa résistance, présente une certaine flexibilité en torsion autour de son axe longitudinal, d'où des déformations répétées de torsion.

Par ailleurs, l'altitude de croisière d'un avion gros porteur à cellule de grand diamètre nécessite une pressurisation importante qui vient ajouter des contraintes supplémentaires sur ledit revêtement extérieur, et un travail en fatigue accru du fait des cycles pressurisation – dépressurisation.

Les bords adjacents des tôles, qui se recouvrent et sont généralement fixés à une desdites lisses, peuvent être le lieu de naissance de criques de fatigue, criques difficiles à déceler en raison de la superposition des éléments constituant la jonction.

De telles criques pourraient rendre difficile, sinon impossible, le maintien de la pressurisation.

Si dans lesdites jonctions, de telles criques naissaient et se développaient sans être décelées et si leur propagation était telle qu'il y ait des risques de rupture, la structure objet de l'invention contribuerait à assurer la tenue du fuselage.

Bien entendu, ces jonctions sont réalisées avec le plus grand soin, elles font l'objet de contrôles effectués avec la plus grande attention et satisfont à certaines normes de sécurité.

La présente invention a pour objet une structure de fuselage assurant la transmission des efforts de tension de part et d'autre d'une telle jonction longitudinale, même dans le cas où celle-ci serait totalement rompue. La structure de fuselage selon l'invention admet la possibilité de criques dans une jonction se développant jusqu'à la rupture complète de celle-ci. Elle maintient la sécurité, malgré cet endommagement maximal et remplit son rôle aussi bien dans le cas d'une rupture progressive que d'une rupture instantanée du revêtement. Cette structure de fuselage admet également la rupture d'un cadre au voisinage de la jonction rompue. Ainsi, la structure de fuselage selon l'invention remplit les conditions de sécurité les plus sévères et notamment celles imposées par les normes FAR 25.

A cette fin, selon l'invention, la structure de fuselage pour aéronef, comportant une suite de cadres transversaux espacés et solidarisés entre eux au moyen de lisses longitudinales réparties à la périphérie desdits cadres, l'ensemble des cadres et des lisses étant recouvert d'un revêtement extérieur constitué d'éléments en plaque, fixés sur ledit ensemble et assemblés entre eux le long de lignes de jonction respectivement transversales et longitudinales, est remarquable en ce que ladite structure comporte de plus une pluralité de pattes réparties par paires de façon que les deux pattes d'une paire soient reliées de façon rigide, directement ou indirectement, respectivement à deux éléments de revêtement adjacents, de part et d'autre d'une jonction longitudinale reliant, ces deux éléments de revêtement et en ce que les deux pattes de chaque paire sont reliées entre elles par des moyens de liaison lâche n'exerçant aucun effort sur lesdites pattes lorsque ladite jonction longitudinale remplit sa fonction de solidarisation des éléments de revêtement, mais susceptibles de s'opposer à l'écartement éventuel des deux pattes correspondantes à la suite de la rupture de la liaison longitudinale de part et d'autre de laquelle elles sont disposées.

Ainsi, l'ensemble des paires de pattes et de leurs moyens de liaison forme un dispositif de sécurité en attente tant que les jonctions longitudinales des tôles ne sont pas rompues, mais intervenant dès que la rupture devient importante, pour assurer la transmission des efforts, à la place de la ou des jonctions rompues.

Avantageusement, afin de remédier également à une éventuelle rupture de cadre, lesdites pattes d'une paire sont non seulement rigidement reliées aux tôles du revêtement se trouvant de part et d'autre d'une jonction longitudinale, mais encore au cadre adjacent. D'ailleurs, la liaison entre les pattes et le tôles peut être effectuée par l'intermédiaire dudit cadre adjacent.

De préférence, pour des raisons de symétrie, les paires de pattes et les moyens de liaison lâche de celles-ci sont associés par couples, les pattes et les moyens de liaison d'une paire du couple étant symétriques, par rapport au cadre adjacent, des pattes et des moyens de liaison de l'autre paire dudit couple.

Dans ce dernier cas, il peut être avantageux que chaque patte d'une paire soit double et passe à travers le cadre.

De façon connue, lesdits cadres peuvent être constitués d'une part, d'une suite continue d'équerres multiples fixées aux tôles et aux lisses, pour former une première couronne annulaire plate et, d'autre part, d'une seconde couronne annulaire plate intérieure, d'une seule pièce, la liaison entre les deux couronnes étant réalisée le long des bords périphériques interne et externe des première et seconde couronnes respectivement, ainsi que le long de prolongements radiaux desdites équerres venant en superposition de ladite seconde couronne. Il est alors intéressant de remplacer certaines équerres de la première couronne par les pattes conformes à l'invention.

Les moyens de liaison lâche entre les pattes d'une paire peuvent être constitués par des liens (par exemple des câbles d'acier), des bielles, des tirants filetés ou analogues sensiblement transversaux à la jonction longitudinale correspondante, ou bien encore par des chapes oblongues traversées par un axe sensiblement parallèle à ladite jonction.

Les figures du dessin annexé feront bien comprendre comment l'invention peut être réalisée.

La figure 1 est une vue en perspective schématique d'un tronçon de fuselage de conception connue.

La figure 2 est une vue agrandie en perspective d'un détail de la figure 1.

Les figures 3, 6 et 8 illustrent, également en perspective, différentes réalisations conformes à l'invention.

La figure 4 montre les moyens de liaison de la réalisation de la figure 3.

Les figures 5, 7 et 9 montrent schématiquement les dispositifs des figures 3, 6 et 8 respectivement, le cadre et le revêtement étant supprimés.

Sur ces figures, des références identiques désignent des éléments semblables.

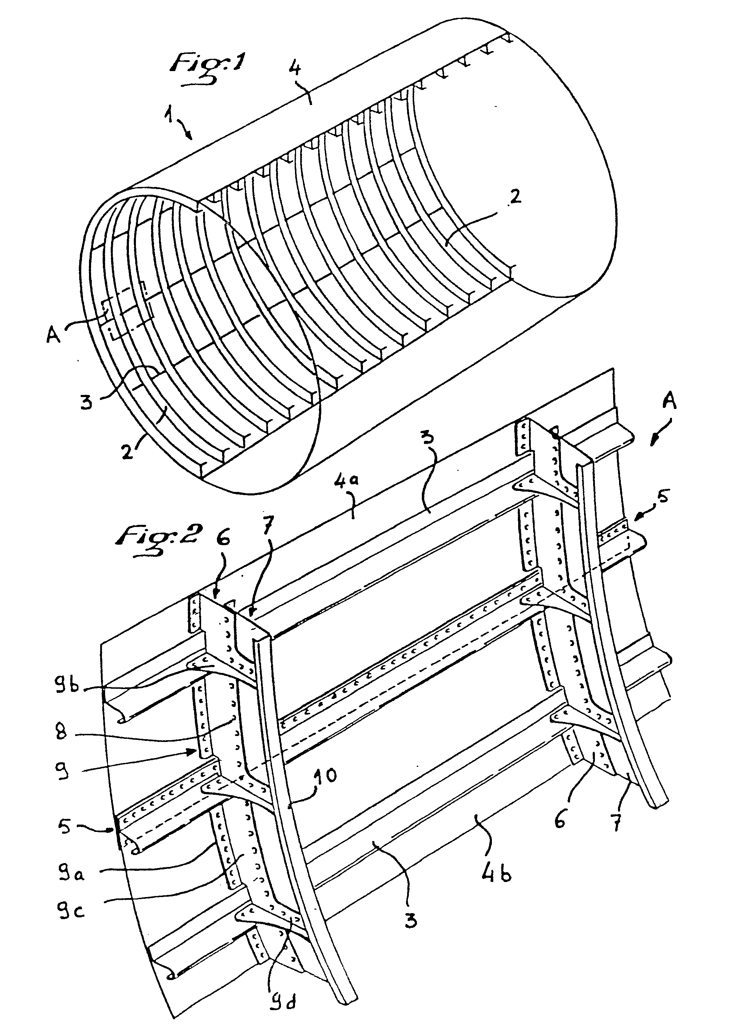

La portion 1 du fuselage d'aéronef connue, montrée schématiquement par la figure 1, comporte une suite de cadres transversaux espacés 2, reliés entre eux par des lisses longitudinales 3. L'ossature constituée par les cadres 2 et les lisses 3 est recouverte d'un revêtement extérieur 4.

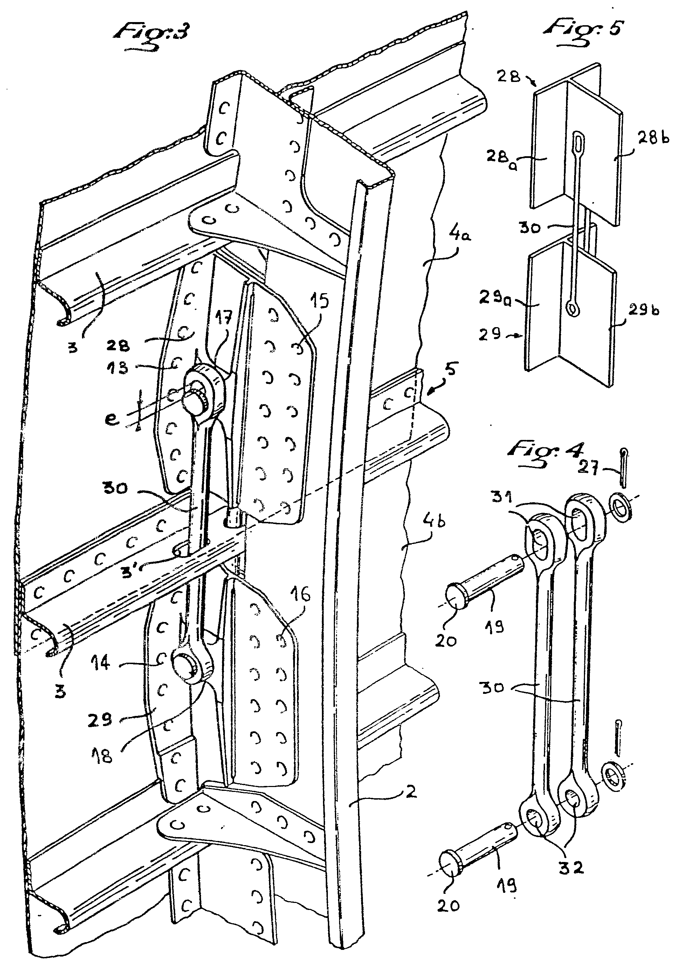

Comme le montre mieux la figure 2, qui représente à plus grande échelle le détail A de la figure 1, le revêtement extérieur 4 est composé de tôles courbes 4a et 4b, épousant l'ossature 2, 3 et reliées entre elles par des jonctions longitudinales 5 (les jonctions transversales des tôles du revêtement extérieur ne sont pas représentées). Ces jonctions longitudinales 5 sont obtenues par superposition des bords en contact desites tôles 4a et 4b et rivetage des bords superposés. Une lisse 3 court le long des jonctions 5 et est rivetée avec lesdits bords superposés des tôles 4a et 4b. D'autres lisses 3 se trouvent contre la face interne des tôles 4a et 4b, entre les jonctions 5.

Chaque cadre 2 est constitué de deux couronnes annulaires plates concentriques 6 et 7 assemblées le long d'une ligne de rivetage 8 circulaire et intermédiaire. La première couronne, qui se trouve au contact direct du revêtement extérieur 4 est composée d'une suite continue d'équerres 9 multiples comportant une aile 9a pour la fixation des tôles 4a et 4b, une aile 9b pour la fixation des lisses 3 et une aile 9c pour la fixation de la couronne 7. De plus, les équerres 9 comportent des prolongements radiaux 9d venant en recouvrement de la couronne 7 et serrant également à la fixation de celle-ci. La couronne 7 est d'une seule pièce et comporte du côté intérieur un rebord 10.

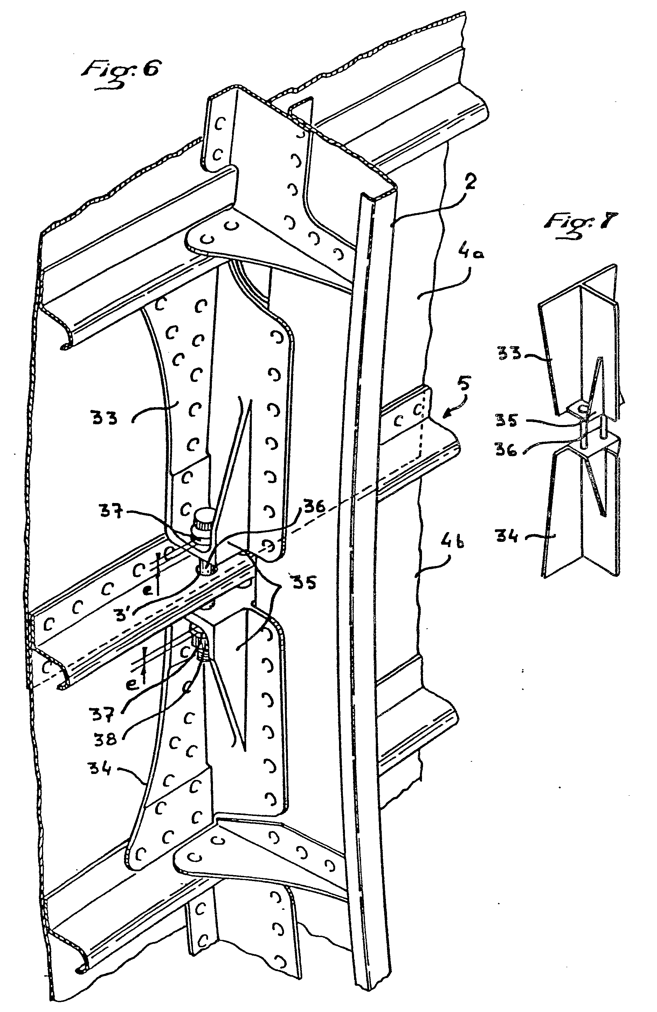

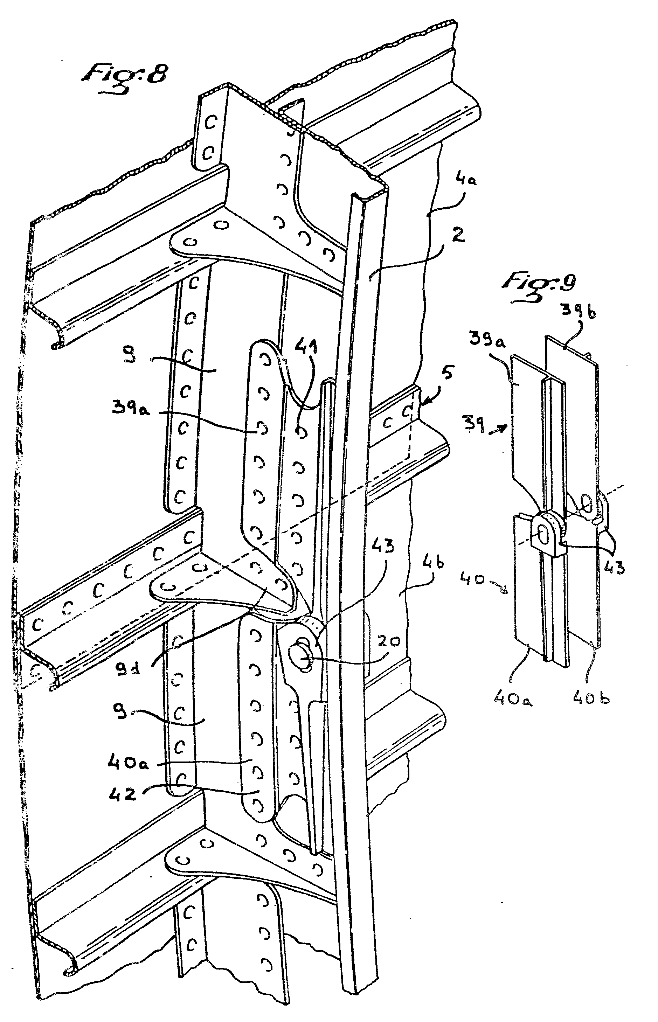

Dans le mode de réalisation selon l'invention des figures 3 à 5, on a supprimé les deux équerres multiples 9 disposées de part et d'autre de la jonction 5 et de la lisse 3 correspondante, de sorte que l'on a ménagé deux ouvertures dans la couronne 6. Dans ces deux ouvertures, on a respectivement monté une double patte 28 et une double patte 29. Les double pattes 28 et 29 peuvent chacune être d'une seule pièce ou bien constituée de deux moitiés accolées de part et d'autre du cadre 2. De toutes façons, chacune d'elles est au moins sensiblement symétrique par rapport au plan du cadre 2 et présente une section approximativement en forme de T (voir la figure 5). L'aile transversale 29a ou 29a desdites pattes 28 et 29 est fixée sur la tôle 4a ou sur la tôle 4b, respectivement, grâce à des lignes de rivetage respectives 13 et 14. Par ailleurs, l'aile médiane 28b ou 29b desdites pattes 28 et 29 est fixée sur la couronne 7, respectivement au moyen de lignes de rivetage 15 ou 16.

La double patte 28 comporte, dans son aile médiane 28b, une ouverture 17 à bords épais, disposée entre la couronne 7 et la tôle 4a. De façon semblable, la double patte 29 comporte, dans son aile médiane 29b, une ouverture 18.

Des axes 19, pourvus chacun d'une tête 20, peuvent traverser les ouvertures 17 et 18.

Par ailleurs, dans le mode de réalisation des figures 3 à 5, on prévoit deux bielles 30, pourvues d'ouvertures 31 et 32 à leurs extrémités, au moins l'une desdites ouvertures 31 ou 32 étant oblongue.

Les bielles 30 sont fixées aux double pattes 28 et 29 de façon à se trouver de part et d'autre du cadre. On utilise pour cela les axes 19, à tête 20, traversant les ouvertures 17 et 18 prévues dans les ailes médianes des doubles pattes 28 et 29 et des goupilles traversantes 27. Il est éventuellement nécessaire de prévoir des ouvertures 3' dans la lisse intermédiaire 3, pour le passage des bielles 30.

Au montage des bielles 30, celles-ci ne sont pas sous tension grâce à la forme oblongue des ouvertures 31. Cette forme permet l'obtention d'un jeu e, qui disparaît en cas de rupture de la jonction 5 et donc d'éloignement relatif des tôles 4a et 4b. Lorsque le jeu e est nul, les bielles 30 prennent le relais de la jonction 5 défectueuse pour éviter la propagation et l'aggravation de la rupture de ladite jonction.

Dans le mode de réalisation des figures 6 et 7, les doubles pattes 33 et 34 sont identiques entre elles et présentent, comme les doubles pattes 28 et 29, la forme approximative d'un T pour pouvoir être fixées à la fois sur les tôles 4a et 4b et sur la couronne 7. Les doubles pattes 33 et 34 présentent des excroissances latérales 35, respectivement deux à deux en regard, pouvant être traversées par des boulons de traction 36, remplaçant les bielles 30. Les boulons 36 sont montés avec des jeux e, grâce à des rondelles souples 37, respectivement interposées sous la tête desdits bou-

lons et du côté intérieur des écrous 38 vissés sur ceux-ci.

Les figures 8 et 9 montrent un mode de réalisation dans lequel les pattes 39 et 40 ne sont pas prévues pour être fixées à la fois sur les tôles 4a et 4b et sur le cadre 2, mais seulement sur ce dernier. Dans ce cas, les deux équerres multiples 9 disposées de part et d'autre de la jonction 5 restent en place, seul le prolongement 9d se trouvant au niveau de ladite jonction étant éventuellement raccourci.

La double patte 39 se compose de deux plaques 39a et 39b destinées à être fixées à plat, par des lignes de rivetage 41, sur la couronne 7, de part et d'autre de celle-ci mais du côté de la jonction 5 correspondant à la tôle 4a. De même, la double patte 40 se compose de deux plaques 40a et 40b destinées à être fixées à plat, par des lignes de rivetage 42, sur la couronne 7 de part et d'autre de celle-ci, mais du côté de la jonction 5 correspondant à la tôle 4b. Par ailleurs, les plaques 39b et 40b d'autre part sont articulées entre elles avec un jeu au moyen d'un axe commun 19 pourvu d'une tête 20 et associée à une goupille 27 et éventuellement à une rondelle. L'axe commun 19 traverse par des trous oblongs (non visibles sur la figure 8) de la couronne 7 et par d'autres trous oblongs des chapes 43 formées dans les plaques 39a, 49a, 39b et 40b.

Ainsi, grâce au dispositif des figures 8 et 9, on supplée à la rupture de la jonction 5, dès que celle-ci entraîne la rupture du cadre 2.

**Revendications**

1. Structure de fuselage pour aéronef, comportant une suite de cadres transversaux (2) espacés et solidarisés entre eux au moyen de lisses longitudinales (3) réparties à la périphérie desdits cadres, l'ensemble des cadres et des lisses étant recouvert d'un revêtement extérieur (4) constitué d'éléments en plaque (4a, 4b), fixés sur ledit ensemble et assemblés entre eux le long de lignes de jonction (5) respectivement transversales et longitudinales, caractérisée en ce que ladite structure comporte de plus une pluralité de pattes (28, 29–33, 34–39, 40) réparties par paires de façon que les deux pattes d'une paire soient reliées de façon rigide, directement ou indirectement, respectivement à deux éléments de revêtement (4a, 4b) adjacents, de part et d'autre d'une jonction longitudinale (5) reliant ces deux éléments de revêtement et en ce que les deux pattes de chaque paire sont reliées entre elles par des moyens de liaison lâche (30, 36, 43) n'exerçant aucun effort sur lesdites pattes lorsque ladite jonction longitudinale remplit sa fonction de solidarisation des éléments de revêtement, mais susceptibles de s'opposer à l'écartement éventuel des deux pattes correspondantes à la suite de la rupture de la liaison longitudinale de part et d'autre de laquelle elles sont disposées.

2. Structure de fuselage selon la revendication 1, caractérisée en ce que lesdites pattes (28, 29–33, 34–39, 40) d'une paire sont rendues solidaires du cadre adjacent (2) et/ou des éléments de revêtement (4a, 4b) réunis par ladite jonction longitudinale.

3. Strucutre de fuselage selon l'une des revendications 1 ou 2, caractérisée en ce que les paires de pattes (28, 29–33, 34–39, 40) et les moyens de liaison lâche (30, 35, 36, 43) de celles-ci sont associés par couples, les pattes et les moyens de liaison d'une paire du couple étant symétriques, par rapport au cadre (2) adjacent, des pattes et des moyens de liaison de l'autre paire dudit couple.

4. Structure de fuselage selon la revendication 3, caractérisée en ce que chaque patte (28, 29–33, 34) d'une paire est double et passe à travers le cadre (2).

5. Structure de fuselage selon l'une des revendications précédentes, dans laquelle lesdits cadres (2) sont constitués d'une part d'une suite continue d'équerres multiples (9) fixées aux tôles et aux lisses, pour former une première couronne annulaire plate (6) et, d'autre part, d'une seconde couronne annulaire plate intérieure (7), d'une seule pièce, la liaison entre les deux couronnes (6, 7) étant réalisée le long des bords périphériques interne et externe des première et seconde couronnes (6, 7) respectivement, ainsi que le long de prolongements radiaux (9d) desdites équerres venant en superposition de ladite seconde couronne (7), caractérisée en ce que lesdites pattes (28, 29–33, 34) remplacent certaines desdites équerres multiples (9) de la première couronne.

6. Structure de fuselage selon l'une des revendications précédentes, dans laquelle les cadres (2) sont constitués d'une part, d'une suite continue d'équerres multiples (9) dfixées aux tôles et aux lisses pour former une première couronne annulaire plate (6) et, d'autre part, d'une seconde couronne annulaire plate intérieure (7), d'une seule pièce, la liaison entre les deux couronnes (6, 7) étant réalisée le long des bords périphériques interne et externe des première et seconde couronnes respectivement, ainsi que le long de prolongements radiaux desdites équerres venant en superposition de ladite seconde couronne, caractérisée en ce que lesdites pattes (39, 40) sont fixées à plat sur ladite seconde couronne.

7. Structure de fuselage selon l'une quelconque des revendications précédentes, caractérisée en ce que les moyens de liaison lâche sont constitués par des liens.

8. Structure de fuselage selon l'une quelconque des revendications 1 à 6, caractérisée en ce que les moyens de liaison lâche sont constitués par des bielles (30).

9. Structure de fuselage selon l'une quelconque des revendications 1 à 6, caractérisée en ce que les moyens de liaison lâche sont constitués par des tirants filetés (36).

10. Structure de fuselage selon l'une quelconque des revendications 1 à 6, caractérisée en ce que les moyens de liaison lâche sont constitués par des chapes oblongues (43) traversées par un axe sensiblement parallèle à ladite jonction longitudinale.

## Claims

1. Fuselage structure for aircraft, comprising a series of transverse frames (2) spaced apart from and joined to one another by means of longitudinal stringers (3) distributed on the periphery of said frames, the assembly of the frames and stringers being covered with an outer coating (4) constituted by plate elements (4a, 4b), fixed on said assembly and assembled together along respectively transverse and longitudinal lines of join (5), characterized in that said structure further comprises a plurality of lugs (28, 29–33, 34–39, 40) distributed in pairs so that the two lugs of one pair are rigidly connected, directly or indirectly, respectively to two adjacent covering elements (4a, 4b) on either side of a longitudinal join (5) connecting these two covering elements and in that the two lugs of each pair are connected together by slack connection means (30, 36, 43) exerting no effort on said lugs when said longitudinal join fulfills its function of connection of the covering elements, but adapted to oppose the possible spacing apart of the two corresponding lugs following the break of the longitudinal connection on either side of which they are disposed.

2. Fuselage structure according to Claim 1, characterized in that said lugs (28, 29–33, 34–39, 40) of one pair are rendered fast with the adjacent frame (2) nand/or the covering elements (4a, 4b) connected by said longitudinal join.

3. Fuselage structure according to one of Claim 1 or 2, characterized in that the pairs of lugs (28, 29–33, 34–39, 40) and the slack connection means (30, 35, 36, 43) thereof are associated in couples, the lugs and the connection means of one pair of the couple being symmetrical, with respect to the adjacent frame (2), with the lugs and the connection means of the other pair of said couple.

4. Fuselage structure according to Claim 3, characterized in that each lug (28, 29–33, 34) of a pair is double and passes through the frame (2).

5. Fuselage structure according to one of the preceding Claims, in which said frames (2) are constituted on the one hand by a continuous series of multiple squares (9) fixed to the sheets and to the stringers, to form a first flat annular ring (6) and, on the other hand, by a second inner flat annular ring (7), in one piece, the connection between the two rings (6, 7) being effected along the inner and outer peripheral edges of the first and second rings (6, 7) respectively, as well as along radial extensions (9d) of said squares coming in superposition on said second ring (7), characterized in that said lugs (28, 29–33, 34) replace certain of said multiple squares (9) of the first ring.

6. Fuselage structure according to one of the preceding Claims, in which the frames (2) are constituted on the one hand by a continuous series of multiple squares (9) fixed to the sheets and to the stringers to form a first flat annular ring (6) and, on the other hand, by a second inner flat annular ring (7), in one piece, the connection between the two rings (6, 7) being effected along the inner and outer peripheral edges of the first and second rings respectively, as well as along radial extensions of said squares coming in superposition on said second ring, characterized in that said lugs (39, 40) are fixed flat on said second ring.

7. Fuselage structure according to any one of the preceding Claims, characterized in that the slack connection means are constituted by ties.

8. Fuselage structure according to any one of Claims 1 to 6, characterized in that the slack connection means are constituted by connecting rods (30).

9. Fuselage structure according to any one of Claims 1 to 6, characterized in that the slack connection means are constituted by threaded tie rods (36).

10. Fuselage structure according to any one of Claims 1 to 6, characterized in that the slack connection means are constituted by oblong fork joints (43) traversed by a pin substantially parallel to said longitudinal join.

## Patentansprüche

1. Flugzeugrumpfaufbau bestehend aus einer Folge von transversalen Rahmen, die in Abständen mittels Längsleisten (3) fest miteinander verbunden sind, die auf der Peripherie dieser Rahmen räumlich getrennt angeordnet sind, wobei der Rahmen als Ganzes und die Leisten mit einer Aussenverkleidung (4) aus Kacheln (4a, 4b) bedeckt sind, die auf dem Rahmenganzen fixiert und längs der transversalen bzw. longitudinalen Verbindungslinien (5) miteinander zusammengefügt sind, dadurch gekennzeichnet, dass der Aufbau darüber hinaus mehrere Klammern oder Halter (28, 29–33, 34–39, 40) aufweist, die paarweise derart verteilt angeordnet sind, dass die beiden Klammern eines Paares mittelbar oder unmittelbar mit den jeweiligen beiden benachbarten Verkleidungselementen (4a, 4b) beiderseits einer Längsverbindungsstelle (5) starr verbunden sind, die die beiden Verkleidungselemente miteinander verbindet, und dass die beiden Klammern jedes Paares durch spannungslose Verbindungsmittel (30, 36, 43) miteinander verbunden sind, die dann auf die Klammern keine Wirkung haben, wenn die Längsverbindungsstelle ihre Befestigungsfunktion gegenüber den Verkleidungselementen erfüllt, und die sich einem etwaigen Auseinandergehen der beiden entsprechenden Klammern infolge des Reissens der Längsverbindung widersetzen können, an der sie beiderseits angeordnet sind.

2. Flugzeugrumpfaufbau nach Anspruch 1, dadurch gekennzeichnet, dass die Klammern (28, 29–33, 34–39, 40) eines Paares mit dem benachbarten Rahmen (2) und/oder den mit der Längsverbindungsstelle vereinigten Verkleidungselementen (4a, 4b) fest verbunden sind.

3. Flugzeugrumpfaufbau nach einem der Ansprüche 1 oder 2, dadurch gekennzeichnet, dass die Klammernpaare (28, 29–33, 34–39, 40) sowie ihre spannungslosen Verbindungsmittel (30, 35, 36, 43) gepaart zugeordnet sind und dass die Klammern und Verbindungsmittel eines Paares gegenüber dem benachbarten Rahmen (2) mit den Klammern und den Verbindungsmitteln des anderen Paares symmetrisch sind.

4. Flugzeugrumpfaufbau nach Anspruch 3, dadurch gekennzeichnet, dass jede Klemme (28, 29–33, 34) eines Paares doppelwandig ausgebildet ist und die Leiste (2) durchquert.

5. Flugzeugrumpfaufbau nach einem der vorhergehenden Ansprüche, bei denen die Rahmen (2) einerseits aus einer kontinuierlichen Folge von Mehrfachwinkelbändern (9), die an den Blechen und Leisten befestigt sind, um einen ersten flachen Ringkranz (6) zu bilden, und andererseits aus einem zweiten flachen Innenringkranz (7) aus einem einzigen Stück bestehen, wobei die Verbindung zwischen den beiden Kränzen (6, 7) längs der inneren und der äusseren umlaufenden Ränder des ersten bzw. zweiten Kranzes sowie längs der radialen Verlängerungen (9d) der den zweiten Kranz (7) überlagernden Winkelbänder hergestellt wird, dadurch gekennzeichnet, dass die Klammern (28, 29–33, 34) bestimmte dieser Mehrfachwinkelbänder (9) des ersten Kranzes ersetzen.

6. Flugzeugrumpfaufbau nach einem der vorhergehenden Ansprüche, bei dem die Rahmen (2) einerseits aus einer kontinuierlichen Folge von Mehrfachwinkelbändern (9), die an den Blechen und Leisten befestigt sind, um einen ersten flachen Ringkranz (6) zu bilden, und andererseits aus einem zweiten flachen Innenringkranz (7) aus einem einzigen Stück bestehen, wobei die Verbindung zwischen den beiden Kränzen (6, 7) längs der inneren und der äusseren umlaufenden Ränder des ersten bzw. zweiten Kranzes sowie längs der radialen Verlängerungen (9d) der den zweiten Kranz (7) überlagernden Winkelbänder hergestellt wird, dadurch gekennzeichnet, dass die Klammern (39, 40) auf dem zweiten Kranz plano befestigt sind.

7. Flugzeugrumpfaufbau nach einem der vorhergehenden Ansprüche, dadurch gekennzeichnet, dass als spannungslose Verbindungsmittel Bindeglieder verwendet werden.

8. Flugzeugrumpfaufbau nach einem der Ansprüche 1 bis 6, dadurch gekennzeichnet, dass als spannungslose Verbindungsmittel Zwischenstangen (30) verwendet werden.

9. Flugzeugrumpfaufbau nach einem der Ansprüche 1 bis 6, dadurch gekennzeichnet, dass als spannungslose Verbindungsmittel mit Gewinde versehene Spannstangen (36) verwendet werden.

10. Flugzeugrumpfaufbau nach einem der Ansprüche 1 bis 6, dadurch gekennzeichnet, dass als spannungslose Verbindungsmittel längliche Gabelköpfe (43) verwendet werden, die von einer allgemein parallel zur Längsverbindungsstelle laufenden Achse durchquert werden.

Fig.1

Fig.2

Fig:3

Fig:5

Fig:4

Fig. 6

Fig. 7

0 048 191

*Fig:8*

*Fig:9*

13